# EUROPEAN PATENT APPLICATION

(11) **EP 2 587 297 A1**
(43) Date of publication of application: **01.05.2013**
(21) Application number: 11798070.6
(22) Date of filing: 17.06.2011
(51) Int. Cl.: G02B 21/36

(54) **IMAGE GENERATION DEVICE**

(30) Priority: 23.06.2010 JP 2010142879
(71) Applicant: Hamamatsu Photonics K.K., Hamamatsu-shi, Shizuoka 435-8558 (JP)
(72) Inventor: TERADA Hirotoshi, Hamamatsu-shi Shizuoka 435-8558 (JP)
(74) Representative: HOFFMANN EITLE
(86) International application number: PCT/JP2011/063973
(87) International publication number: WO 2011/162186

(57) **Abstract**

An image generation device 1 comprises a laser light source 3, a laser output control unit 11, a laser scanner 5 for scanning an irradiation position of the laser light, a modulation pattern control unit 15 for controlling the laser output control unit 11 and laser scanner 5 so as to irradiate the object A with illumination light having a plurality of spatial modulation patterns, an imaging device 7 for capturing observation light brought from the object A in response to irradiation with the illumination light having the plurality of spatial modulation patterns so as to acquire a plurality of pattern images, and an image data operation unit 19 for generating a high-resolution image of the object A by using the plurality of pattern images acquired by the imaging device 7.

## Description

### Technical Field

The present invention relates to an image generation device which generates an image by irradiating an object to be measured with spatially modulated light.

### Background Art

Optical devices which irradiate semiconductor devices and the like with spatially modulated light and observe resulting images have conventionally been known. For example, the following Patent Literature 1 discloses an optical device in which a sample is irradiated with light through a diffraction grading from a light source device, and a sample image generated at this time is captured by a CCD camera. This light source device obtains a plurality of modulated images by capturing images while moving the diffraction grading at a constant velocity in a direction perpendicular to stripes of the diffraction grating, and then subjects the modulated images to image processing, so as to form an image of the sample. The following Patent Literature 2 discloses a microscope device in which an SLM (Spatial Light Modulator) is arranged in an optical path of illumination light in order to irradiate a sample with spatially modulated light. Such a structure requires no means for moving diffraction gratings.

### Citation List

### Patent Literature

Patent Literature 1: Japanese Patent Application Laid-Open No. 2001-117010
Patent Literature 2: Japanese Patent Application Laid-Open No. 2007-199572

### Summary of Invention

### Technical Problem

When an optical system such as an objective lens is changed in the optical device disclosed in the above-mentioned Patent Literature 1, however, there is a case where the diffraction grating must be replaced correspondingly. This is because changing the power of the objective lens alters the size thereof, which shifts the position at which diffracted light from the diffraction grating is incident, whereby high-resolution images cannot be obtained. When changing the phase or orientation of the spatially modulated light for irradiating the sample, driving systems for horizontally moving and rotating the diffraction grating are necessary, which complicates the device structure.

Though the microscope device disclosed in the above-mentioned Patent Literature 2 is not required to replace the SLM and necessitates no SLM driving mechanism, an SLM having a large number of pixels is necessary when producing spatially modulated light with a fine pitch in order to attain a higher resolution, whereby the device tends to become more expensive.

In view of such problems, it is an object of the present invention to provide an image generation device which can rapidly obtain high-resolution images in various positions and orientations with a simple device structure.

### Solution to Problem

For achieving the above-mentioned object, the image generation device in accordance with one aspect of the present invention is an image generation device for generating an image of an object to be measured, the device comprising a laser light source for emitting laser light, a laser modulation unit for modulating an intensity of the laser light, a laser scanning unit for scanning an irradiation position of the laser light with respect to the object, a control unit for controlling the laser modulation unit and laser scanning unit so as to irradiate the object with illumination light having a plurality of spatial modulation patterns, an imaging unit for capturing observation light brought from the object in response to irradiation with the illumination light having the plurality of spatial modulation patterns so as to acquire a plurality of pattern images, and an image processing unit for generating a high-resolution image of the object by using the plurality of pattern images acquired by the imaging unit.

In thus constructed image generation device, the laser light emitted from the laser light source irradiates an object to be measured such as a semiconductor device or biological sample, while its intensity is modulated by the laser modulation unit and its irradiation position with respect to the object is scanned by the laser scanning unit. Here, the control unit controls the laser modulation unit and laser scanning unit so as to irradiate the object with illumination light having a plurality of spatial modulation patterns, a plurality of pattern images brought from the object are captured by the imaging unit, and then a high-resolution image is generated by the image processing unit using the plurality of pattern images. This makes it easy to acquire a high-resolution image of the object without replacing components or requiring complicated driving mechanisms. In addition, the phase and orientation of spatial modulation patterns of illumination light irradiating the object can be changed easily, so that a high-resolution image having a desirable position and orientation can be obtained rapidly.

### Advantageous Effects of Invention

The present invention can rapidly obtain high-resolution images in various positions and orientations with a simple device structure.

### Brief Description of Drawings

Fig. 1 is a block diagram illustrating the structure of the image generation device in accordance with a first embodiment of the present invention;
Fig. 2 is a conceptual diagram illustrating a spatial modulation pattern of illumination light defined by a modulation pattern control unit in Fig. 1;
Fig. 3 is a conceptual diagram illustrating a spatial modulation pattern of illumination light defined by the modulation pattern control unit in Fig. 1;
Fig. 4 is a conceptual diagram illustrating a spatial modulation pattern of illumination light defined by the modulation pattern control unit in Fig. 1;
Fig. 5 is a block diagram illustrating the structure of the image generation device in accordance with a second embodiment of the present invention;
Fig. 6 is a schematic structural diagram illustrating an optical system which is a modified example of the present invention; and
Fig. 7 is a schematic structural diagram illustrating an optical system which is a modified example of the present invention.

### Description of Embodiments

In the following, preferred embodiments of the present invention will be explained in detail with reference to the drawings. In the drawings, the same or equivalent parts will be referred to with the same signs while omitting their overlapping descriptions.

### First Embodiment

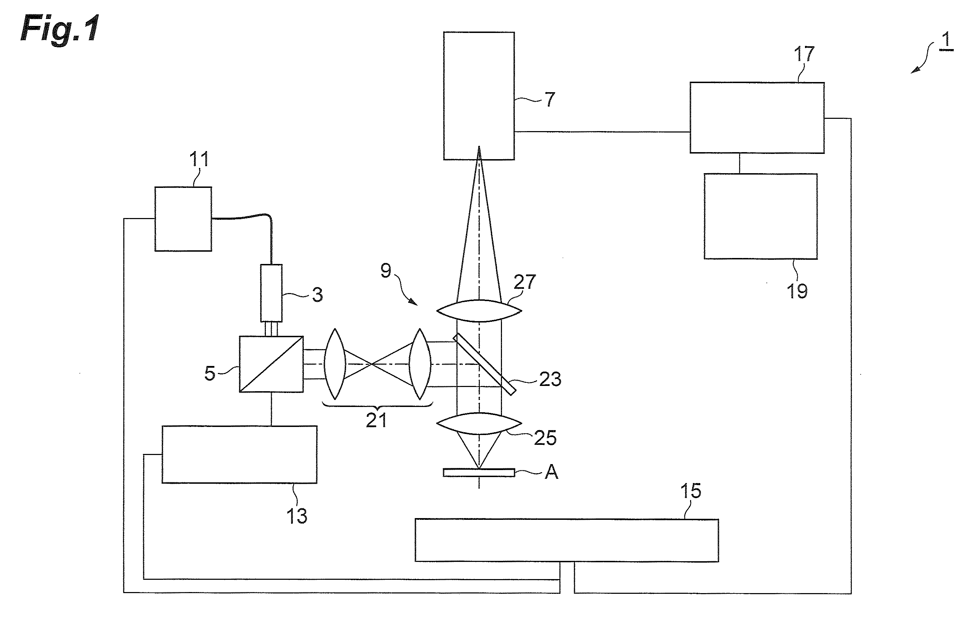

Fig. 1 is a block diagram illustrating the structure of an image generation device 1 in accordance with the first embodiment of the present invention. The image generation device 1 illustrated in Fig. 1 is a device for irradiating an object to be measured such as a semiconductor device with illumination light having a plurality of spatial modulation patterns, capturing a plurality of reflection images (observation images) brought from the object A in response thereto, and obtaining a high-resolution image of the object on the basis of the reflection images. The image generation device 1 comprises a laser light source 3 for emitting laser light, a laser scanner (laser scanning unit) 5, an imaging device (imaging unit) 7 for capturing the reflection images of the object A, an optical system 9 for guiding the laser light from the laser light source 3 to the object A and forming the reflection images of the object A in the imaging device 7, a laser output control unit (laser modulation unit) 11 for controlling the output intensity of the laser light source 3, a scanner control unit 13 for controlling operations of the laser scanner 5, a modulation pattern control unit 15 for controlling the spatial modulation patterns irradiating the object A, an image fetching unit 17 for fetching image data from the imaging device 7, and an image data operation unit (image processing unit) 19 for processing the image data fetched by the image fetching unit 17.

Specifically, the optical system 9 is constituted by a relay lens 21, a light separator 23, an objective lens 25, and an image-forming lens 27. The relay lens 21 is an optical system for efficiently guiding the laser light, whose irradiation angle is oscillated by the laser scanner 5, to the objective lens 25 and acts to project the exit pupil of the objective lens 25 onto a reflecting surface of the laser scanner 5, so that the laser light reflected by the laser scanner 5 securely reaches the objective lens 25. Here, the laser light source 3, laser scanner 5, and relay lens 21 constitute laser scanning means for scanning the laser light; the light separator 23 and objective lens 25 constitute common means for guiding the laser light to the object A and the reflected light from the object A to the imaging device 7; and the image-forming lens 27 and imaging device 7 constitute imaging means for capturing the reflected light from the object A.

The light separator 23 is arranged between the laser scanner 5 and the object A on an optical path of the illumination light. The light separator 23 transmits therethrough observation light such as reflected light and scattered light from the object A so as to guide it through the image-forming lens 27 to the imaging device 7, while reflecting the laser light from the laser scanner 5 so as to guide it through the objective lens 25 to the object A, thereby preventing the reflected light and scattered light from the object A from forming images in the imaging device 7 through the laser scanner 5 acting as the laser scanning unit. Therefore, the observation light is incident on the imaging device 7 at a light-receiving position corresponding to the laser light irradiation position scanned by the laser scanning means on the object A. Employable as the light separator 23 is a half mirror in which the ratio of reflectance to transmittance is 1:1 or a beam splitter having such a predetermined relationship as the ratio of 8:2. When the laser light has a predetermined polarization component, a polarization beam splitter may be used as the light separator 23. In this case, a quarter-wave plate is inserted between the polarization beam splitter and the objective lens 25. Consequently, linearly polarized laser light, if any, incident on the quarter-wave plate from the polarization beam splitter side can be converted into circularly polarized light so as to irradiate the object A, while the reflected light from the object A, when passing through the quarter-wave plate again, can be converted into linearly polarized light whose phase differs by 90° from that at the time of incidence. As a result, the reflected light can be transmitted through the polarization beam splitter, so as to be guided to the imaging device 7.

The laser scanner 5 is an optical system which changes the advancing direction of the laser light, so as to scan its irradiation position two-dimensionally. That is, the laser scanner 5 changes the incident angle of the laser light incident on the relay lens 21, thereby two-dimensionally scanning the irradiation position on the front face of the object A of the laser light irradiating the same through the optical system 9. Employable as thus configured laser scanner 5 is a galvanometer mirror having two mirrors whose axes of rotation are orthogonal to each other, while their angles of rotation are electrically controllable. Examples of others employable as the laser scanner 5 include polygon mirrors, MEMS (Micro Electro Mechanical System) mirrors, AOD (acousto-optical deflectors), resonant scanners (resonance type galvanometer scanners), and EO scanners (electro-optical deflectors).

Here, the intensity of the laser light issued from the laser light source 3 is adapted to be modulated by a control signal from the laser output control unit 11 connected to the laser light source 3, while the position at which the front face of the object A is irradiated with the laser light through the laser scanner 5 is changeable by a control signal from the scanner control unit 13 connected to the laser scanner 5. The modulation pattern control unit 15 is connected to the laser output control unit 11 and scanner control unit 13, so as to control them such that the object A is irradiated with a plurality of predetermined spatial (two-dimensional) modulation patterns.

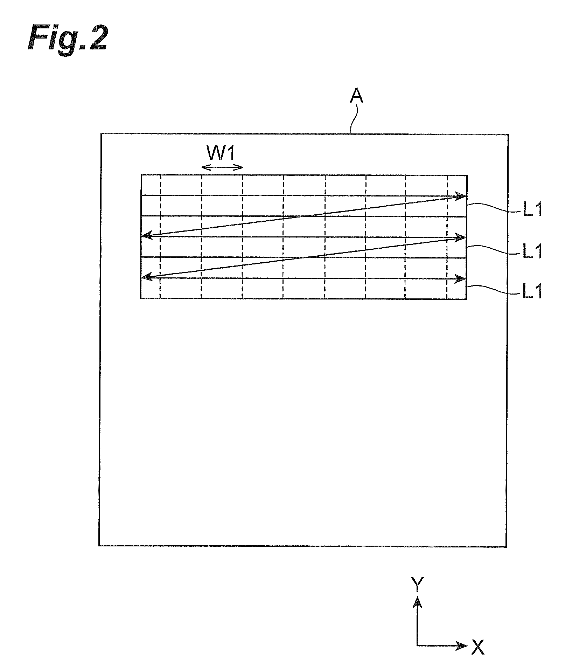

Spatial modulation patterns defined by the modulation pattern control unit 15 will now be exemplified with reference to Figs. 2 to 4.

Figs. 2 to 4 illustrate states where the object A is irradiated with the respective spatial modulation patterns defined by the modulation pattern control unit 15. As illustrated in Fig. 2, the modulation pattern control unit 15 initially controls the laser light so as to move its irradiation position along an X axis which is a predetermined direction along a plane of the object A, while modulating the irradiation intensity of the laser light such that the intensity distribution along the X axis periodically increases and decreases according to a trigonometric function (sin function or cos function). In this diagram, arrows indicate how the laser irradiation position is changed. This forms a band-shaped irradiation pattern L1 periodically modulated by a width W1 along the X axis. Subsequently, the modulation pattern control unit 15 shifts the laser irradiation position along a Y axis which is perpendicular to the X axis and then repeats the formation of the band-shaped irradiation pattern L1 by controlling the movement of the laser light irradiation position along the X direction and the modulation of the laser light intensity. As a result, a spatial modulation pattern having stripes arranged in a row along the Y axis with a desirable pitch W1 can be produced. The intensity of the laser light may also be modulated by periodic ON/OFF.

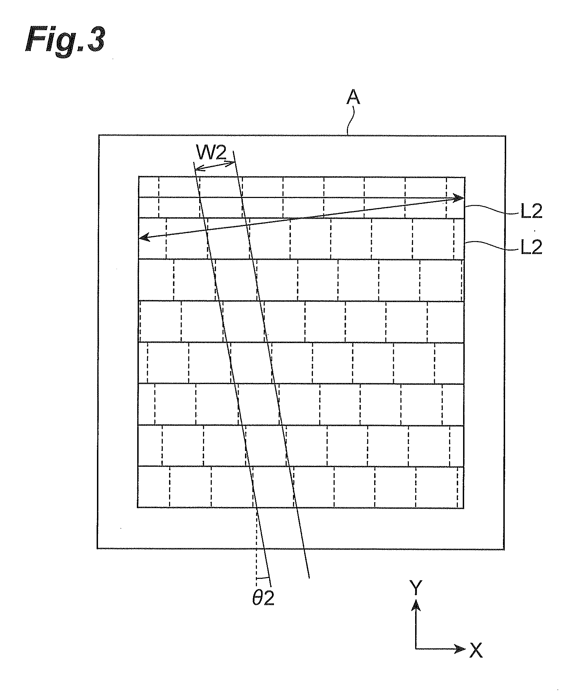

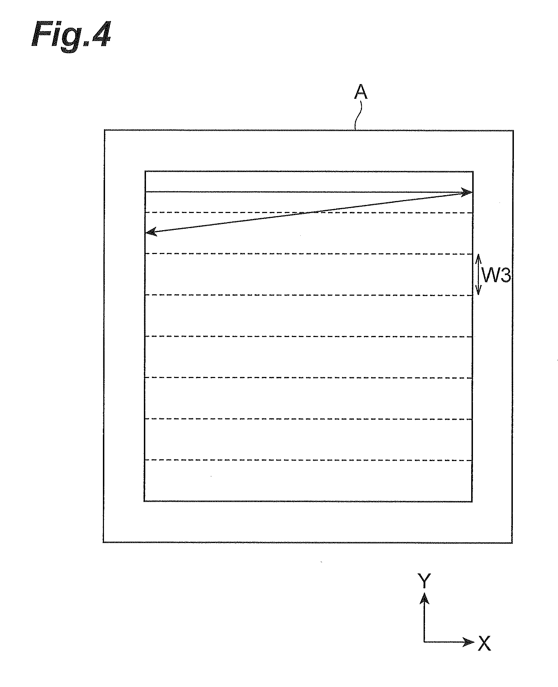

As illustrated in Fig. 3, the modulation pattern control unit 15 may control the modulation of the laser light intensity such that the spatial phase of a band-shaped irradiation pattern L2 along the X axis gradually shifts between patterns adjacent to each other along the Y axis. This can produce a spatial modulation pattern approximating a stripe pattern having a desirable pitch W2 tilted by a desirable angle θ2 from the Y axis. As illustrated in Fig. 4, the modulation pattern control unit 15 may control the modulation so as to keep a uniform irradiation intensity in laser light during one laser light scan along the X axis and modulate the irradiation intensity among a plurality of band-shaped irradiation patterns arranged in a row along the Y axis. This can produce a spatial modulation pattern having stripes along the X axis with a desirable pitch W3.

Since the imaging device 7 receives the observation light such as reflected light at a light-receiving position corresponding to the laser light irradiation position, a reflection image of the object A produced in response to the irradiation with the illumination light having a spatial modulation pattern such as those mentioned above is captured by the imaging device 7, whereby a two-dimensional pattern image is acquired. The pattern image acquired by the imaging device 7 is fetched by the image fetching unit 17. The image fetching unit 17, which is connected to the imaging device 7 and modulation pattern control unit 15, controls exposure timings of the imaging device 7 such that a period during which one spatial modulation pattern is formed on the front face of the object A by the modulation pattern control unit 15 and an exposure period (imaging period) of one two-dimensional pattern image are in synchronization with each other. When spatial modulation patterns such as those illustrated in Figs. 2 to 4 are formed continuously in terms of time, the image fetching unit 17 controls exposure timings such as to expose and accumulate reflection images produced by the whole illumination light of the respective spatial modulation patterns, thereby acquiring different two-dimensional pattern images.

The pattern images fetched by the image fetching unit 17 is subjected to image processing by the image data operation unit 19. For example, the image data operation unit 19 irradiates the front face of the object A with a plurality of spatial modulation patterns having stripes in a row along the Y axis, while changing the spatial phase by a desirable frequency, and combines high-frequency components of a plurality of pattern images obtained thereby, so as to generate a high-resolution image of the object A whose resolution along the X axis is enhanced. The image data operation unit 19 may also emit a plurality of spatial modulation patterns along four directions, while changing the spatial phase by a desirable frequency, and combine high-frequency components of a plurality of pattern images obtained thereby, so as to generate a high-resolution image whose resolution is enhanced in the four directions. More specifically, interference fringe components between a plurality of spatial modulation patterns having irradiated the object and the spatial frequency of the structure of the object are extracted from thus obtained plurality of pattern images, so as to produce low-frequency pattern images in which the high-frequency components of the pattern images are lowered to low-frequency components, and a high-resolution image is generated on the basis of interference fringe components of the low-frequency pattern images.

In the image generation device 1 explained in the foregoing, the object A is irradiated with the laser light emitted from the laser light source 3, while its intensity is modulated by the laser output control unit 11 and its irradiation position with respect to the object A is scanned by the laser scanner 5. At this time, the modulation pattern control unit 15 controls the laser output control unit 11 and laser scanner 5 such that the object A is irradiated with illumination light having a plurality of spatial patterns. After a plurality of pattern images brought from the object A are captured by the imaging device 7, the image data operation unit 19 generates a high-resolution image by using a plurality of pattern images. As a consequence, a high-resolution image of the object A can be acquired easily without replacing components such as diffraction gratings. By contrast, it is necessary for conventional methods using diffraction gratings to replace diffraction gratings when pitches of spatial modulation patterns of illumination light are to be changed. At this time, the first-order light from the diffraction grating is required to be made incident on the very edge of an objective lens in order to enhance the resolution, which also makes it necessary to replace the objective lens. Changing the power of the objective lens in the conventional device using the diffraction grating also alters the size of the objective lens in general, so as to shift the position at which the first-order light from the diffraction grating is incident, which makes it necessary to replace the diffraction grating in order to obtain a high-resolution image.

The image generation device 1 can also easily acquire high-resolution images of the object A without necessitating complicated driving mechanisms for driving diffraction gratings and the like. That is, only a simple optical system and a laser scanner or the like are required to be mounted in this embodiment. In addition, the phase and orientation of spatial modulation patterns of illumination light irradiating the object can be changed easily under the control of the modulation pattern control unit 15, so that a high-resolution image having a desirable position and orientation can be obtained rapidly. By contrast, the conventional device using an SLM (Spatial Light Modulator) for generating a spatial modulation pattern necessitates a very fine SLM in order to diffract light to a given direction by a given angle. When varying the phase of stripes to be projected on a sample among three kinds, for example, three times the number of stripes at a resolution limit equals the number of pixels required in one axial direction. For higher resolutions, stripes in two directions of X and Y axes orthogonal to each other are not enough for attaining a sufficient resolution in an oblique direction, thus requiring stripes in the oblique direction as well, which makes it necessary to produce stripes in the 45° direction with the same pitch as in the directions of the X and Y axes. Since the SLM has quadrangular pixels, however, stripes having the same pitch cannot be produced in the oblique direction, whereby the resolution is lowered by decreasing the stripe pitch, or the same pitch is achieved by using an SLM having a large number of pixels. As a result, the conventional device necessitates an expensive SLM. Problems such as transmission/reflection losses in the SLM, losses at pixel joints, zero-order light, and higher-order light also occur.

Techniques in which laser light is modulated while being scanned two-dimensionally are likely to increase the intensity at the irradiation point in the case where the object A exhibits a nonlinear reaction, e.g., it is a fluorescent sample or the like which causes two-photon absorption or one which produces second-order harmonics (SHG: second harmonic generation), whereby such a reaction is likely to occur. As a result, observations under higher resolutions are possible by utilizing two-photon absorption, for example. Producing an image by using interference fringe components with harmonic components of spatial modulation pattern frequencies can achieve further higher resolutions.

Providing the light separator 23 can prevent reflection images from the object A from returning to the laser scanner 5 side, so that the reflection images of the object A can be detected as pattern images in a wide range by the imaging device 7. As a consequence, high-resolution images of the object A can be obtained more securely.

Since the laser output control unit 11 modulates the intensity of the laser light so as to change it according to a trigonometric function, spatial modulation patterns can be formed easily.

### Second Embodiment

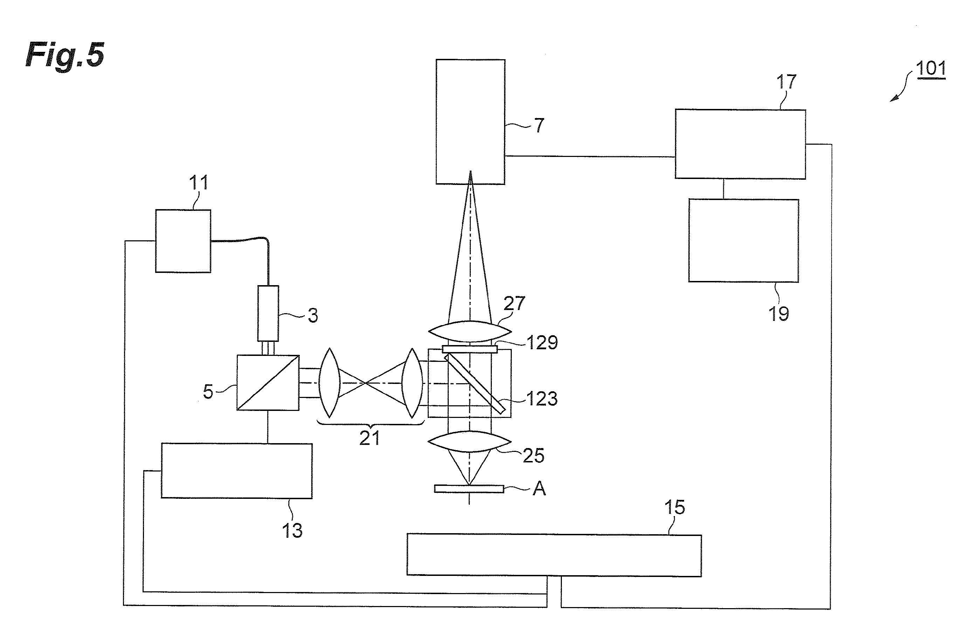

Fig. 5 is a block diagram illustrating the structure of an image generation device 101 in accordance with the second embodiment of the present invention. The image generation device 101 illustrated in this diagram is a device for irradiating a fluorescent object to be measured such as a cell with excitation light (illumination light) having a plurality of spatial modulation patterns, capturing a plurality of fluorescent images (observation images) emitted from the object A in response thereto, and obtaining a high-resolution image of the object on the basis of the fluorescent images. This image generation device 101 differs from the first embodiment in that its light separator 123 has a different function and that a barrier filter 129 is provided between the light separator 123 and image-forming lens 27.

That is, the light separator 123 transmits therethrough the fluorescence from the object A so as to guide it to the imaging device 7 through the image-forming lens 27, while reflecting the laser light from the laser scanner 5 so as to guide it to the object A through the objective lens 25, thereby preventing the fluorescence, which is observation light from the object A, from forming images in the imaging device 7 through the laser scanner 5 acting as the laser scanning unit. Therefore, the observation light is incident on the imaging device 7 at a light-receiving position corresponding to the laser light irradiation position scanned by the laser scanning means on the object A. Employable as the light separator 23 is a dichroic mirror which separates the excitation light having a predetermined wavelength component and the fluorescence having a wavelength longer than that of the wavelength component of the excitation light from each other. This dichroic mirror is a mirror including a dielectric multilayer film having such an optical characteristic as to reflect and transmit shorter and longer wavelengths, respectively, which functions to reflect the excitation light incident thereon from the laser scanner 5 side to the objective lens 25 and transmit therethrough the fluorescence emitted from the object A.

The barrier filter 129 cuts off the excitation light so as to prevent it from reaching the imaging device 7 when the imaging device 7 captures pattern images. This barrier filter is a longer-wavelength-transmitting high-pass filter which has such a property as to cut off the wavelength component of the excitation light by absorbing or reflecting it and transmit therethrough the wavelength component of the fluorescence or a bandpass filter which transmits therethrough only the wavelength component of the fluorescence.

Thus constructed image generation device 101 can easily acquire the high-resolution image of the object A even when a fluorescent object such as a cell is to be observed. In addition, the phase and orientation of spatial modulation patterns of illumination light irradiating the object can be changed easily, so that a high-resolution image having a desirable position and orientation can be obtained rapidly.

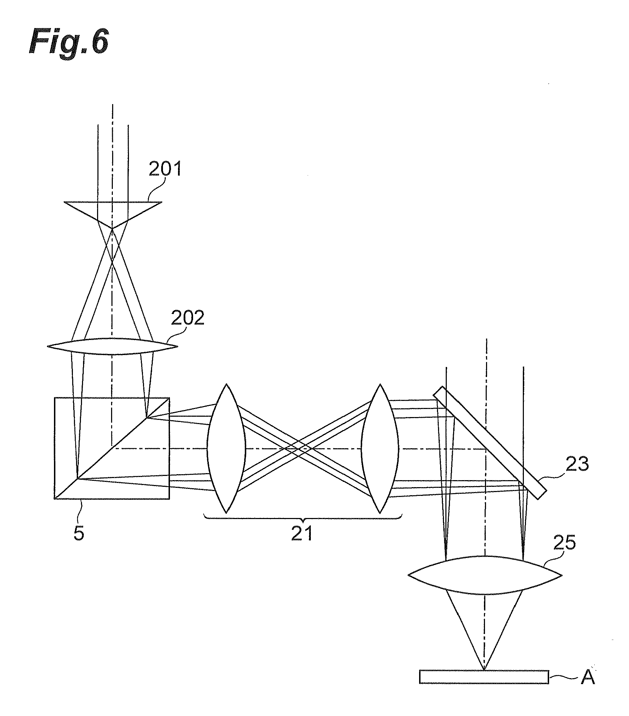

The present invention is not limited to the above-mentioned embodiments. For example, the structure illustrated in Fig. 6 may be employed as a structure of an optical system for guiding the illumination light in order to increase the contrast of the spatial modulation pattern irradiating the object A.

Specifically, an axicon 201 and a converter lens 202 may be inserted between the laser light source 3 and laser scanner 5. The axicon 201, which is a conical prism, is an optical element which converts a parallel beam having a circular cross section emitted from the laser light source 3 into a beam having a ring-shaped cross section. The converter lens 202 is a lens by which the ring-shaped beam emitted from the axicon 201 is projected as an annular form onto the laser scanner 5. Using such an optical system for illumination light can shape the laser light from the laser light source 3 into a ring form at the pupil position of the objective lens 25. This can reduce the half width of the laser light spot on the front face of the object A and thus can prevent the contrast of the spatial modulation pattern from decreasing when scanning the laser beam at an Airy disk diameter.

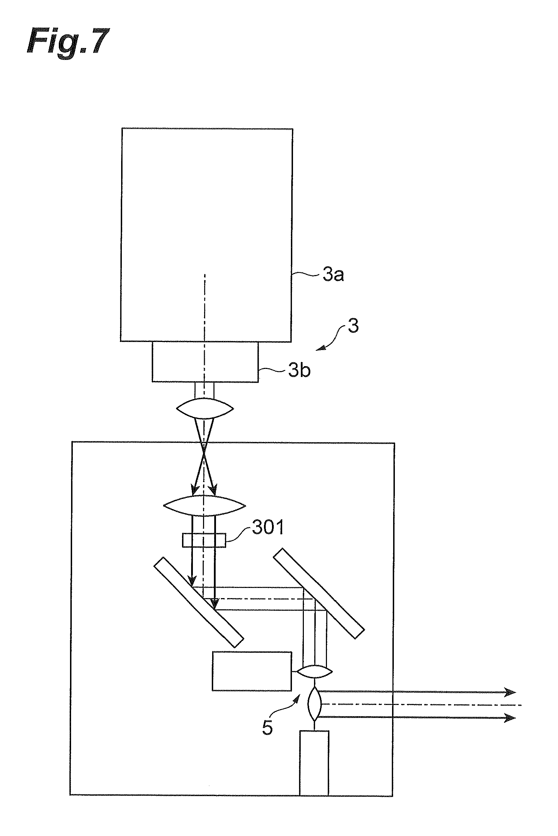

A structure which can observe two-photon excitation in the object A as illustrated in Fig. 7 may also be used as the laser light source 3 of the image generation device 101. Specifically, a structure constituted by an ultrashort pulse laser 3a and a laser modulator 3b for modulating its output is employed as the laser light source 3, and an excitation wavelength selection filter 301 for selecting a desirable wavelength component from the laser light is inserted between the laser light source 3 and laser scanner 5. The two-photon excitation is a phenomenon in which an electron is excited by two photons at a wavelength which is twice that of the original excitation light and thereby emits fluorescence. Therefore, the excitation wavelength selection filter 301 functions to transmit therethrough light having a wavelength which is twice that of the excitation wavelength of the fluorescent sample. Correspondingly usable as the light separator 23 is a dichroic mirror having such an optical characteristic as to reflect and transmit longer and shorter wavelengths, respectively, which functions to reflect the excitation light having a longer wavelength incident thereon from the laser scanner 5 side to the objective lens 25 and transmit therethrough the fluorescence having a shorter wavelength emitted from the object A. Employable as the barrier filter 129 is a shorter-wavelength-transmitting low-pass filter having such a property as to cut off the longer wavelength component of the excitation light by absorbing or reflecting it and transmit therethrough the shorter wavelength component of the fluorescence or a bandpass filter which transmits therethrough only the wavelength component of the fluorescence.

Preferably, a light separator is further provided on an optical path of the illumination light between the laser scanning unit and the object so as to guide the observation light from the object to the imaging unit separately from the optical path of the illumination light. In this case, the observation light from the object can be detected as a wide range of pattern images by the imaging unit.

Also preferred is a structure in which the observation light brought from the object is captured by the imaging unit without passing through the laser scanning unit. Such a structure makes it possible to detect the observation light from the object as a two-dimensional pattern image.

It is also preferable for the imaging unit to be controlled such that a period for capturing one pattern image is in synchronization with a period for forming one spatial modulation pattern in the control unit. This allows a plurality of pattern images corresponding to a plurality of spatial modulation patterns of the illumination light to be easily acquired while being separated from each other.

It is also preferable for the image processing unit to extract an interference fringe component between a plurality of spatial modulation patterns having irradiated the object and a spatial frequency of a structure of the object from a plurality of pattern images acquired by the imaging unit, so as to produce a low-frequency pattern image having lowered a high-frequency component of the pattern images to a low-frequency component, and generate a high-resolution image according to an interference fringe component of the low-frequency pattern image. In this case, changing the phase and orientation of spatial modulation patterns of illumination light irradiating the object can efficiently yield a high-resolution image having a desirable position and orientation.

It is also preferable for the laser modulation unit to modulate the intensity of the laser light so that the intensity changes according to a trigonometric function. Providing such a laser modulation unit makes it easier to form the spatial modulation patterns.

It is also preferable for the control unit to form spatial modulation patterns different from each other by changing the phase and frequency of the trigonometric function. This makes it easier to form spatial modulation patterns having various pitches and phases.

### Industrial Applicability

The present invention is used for an image generation device which generates an image by irradiating an object to be measured with spatially modulated light and can rapidly obtain high-resolution images in various positions and orientations with a simple device structure.

### Reference Signs List

1, 101...image generation device; 3...laser light source; 5...laser scanner (laser scanning unit); 7...imaging device (imaging unit); 11...laser output control unit (laser modulation unit); 15...modulation pattern control unit; 19...image data operation unit (image processing unit); 23, 123...light separator; A...object to be measured

## Claims

1. An image generation device for generating an image of an object to be measured, the device comprising:
a laser light source for emitting laser light;
a laser modulation unit for modulating an intensity of the laser light;
a laser scanning unit for scanning an irradiation position of the laser light with respect to the object;
a control unit for controlling the laser modulation unit and laser scanning unit so as to irradiate the object with illumination light having a plurality of spatial modulation patterns;
an imaging unit for capturing observation light brought from the object in response to irradiation with the illumination light having the plurality of spatial modulation patterns so as to acquire a plurality of pattern images; and
an image processing unit for generating a high-resolution image of the object by using the plurality of pattern images acquired by the imaging unit.

2. An image generation device according to claim 1, further comprising a light separator provided on an optical path of the illumination light between the laser scanning unit and the object so as to guide the observation light from the object to the imaging unit separately from the optical path of the illumination light.

3. An image generation device according to claim 1 or 2, wherein the observation light brought from the object is captured by the imaging unit without passing through the laser scanning unit.

4. An image generation device according to one of claims 1 to 3, wherein the imaging unit is controlled such that a period for capturing one pattern image is in synchronization with a period for forming one spatial modulation pattern in the control unit.

5. An image generation device according to one of claims 1 to 4, wherein the image processing unit extracts an interference fringe component between the plurality of spatial modulation patterns having irradiated the object and a spatial frequency of a structure of the object from the plurality of pattern images acquired by the imaging unit, so as to produce a low-frequency pattern image having lowered a high-frequency component of the pattern images to a low-frequency component, and generates the high-resolution image according to an interference fringe component of the low-frequency pattern image.

6. An image generation device according to one of claims 1 to 5, wherein the laser modulation unit modulates the intensity of the laser light so that the intensity changes according to a trigonometric function.

7. An image generation device according to claim 6, wherein the control unit forms spatial modulation patterns different from each other by changing the phase and frequency of the trigonometric function.
